# EUROPÄISCHE PATENTSCHRIFT

(11) **EP 3 337 629 B1**
(45) Veröffentlichungstag und Bekanntmachung des Hinweises auf die Patenterteilung: **05.10.2022**
(21) Anmeldenummer: 16750739.1
(22) Anmeldetag: 04.08.2016
(51) Int. Cl.: B21D 35/00, B21D 22/16, B21D 39/03, B23K 20/227

(54) **VERFAHREN ZUM HERSTELLEN EINES FORMTEILS**
METHOD FOR PRODUCING A SHAPED PART
PROCÉDÉ DE FABRICATION D'UNE PIÈCE MOULÉE

(30) Priorität: 20.08.2015 DE 102015113869
(43) Veröffentlichungstag der Anmeldung: 27.06.2018
(73) Patentinhaber: ThyssenKrupp Steel Europe AG, 47166 Duisburg (DE); thyssenkrupp AG, 45143 Essen (DE)
(72) Erfinder: GROSSERÜSCHKAMP, Thomas, 47119 Duisburg (DE); FLÖTH, Thomas, 47249 Duisburg (DE)
(74) Vertreter: ThyssenKrupp Steel Europe AG
(86) Internationale Anmeldenummer: PCT/EP2016/068615
(87) Internationale Veröffentlichungsnummer: WO 2017/029117

(56) Entgegenhaltungen:
- DE-A1- 1 527 584
- DE-A1-102007 023 972
- DE-B1- 1 579 469
- US-A- 2 171 040
- US-A- 3 173 202
- US-A1- 2013 302 634

## Beschreibung

### Stand der Technik

Die Erfindung betrifft ein Verfahren zum Herstellen eines Formteils.

Insbesondere betrifft die vorliegende Erfindung ein Verfahren, bei dem durch Plattieren eine Materialfolge im Formteil gezielt zusammengestellt wird. Dabei sorgt das Plattieren typischerweise dafür, dass eine erste Lage bzw. ein Grundkörper von mindestens einer zweiten Lage aus einem anderen Material überdeckt wird, indem durch ein mechanisches Einwirken, beispielswiese durch ein Walzen, ein stoffschlüssiger Verbund zwischen der ersten und der mindestens zweiten Lage erzeugt wird. Damit wird regelmäßig beabsichtigt, einen Grundkörper mit einem gegenüber dem Grundkörper wertigeren Material zu überdecken oder - wie es beispielsweise in der Druckschrift DE 10 2012 100 278 A1 offenbart ist und den Oberbegriff bildet - im gefertigten Formteil einen Materialverlauf mit unterschiedlichen physikalischen Eigenschaften zu erzeugen. Dabei wird das Formteil aus einem Band, bei dem im Vorfeld durch ein aufwendiges Plattieren von Brammen und Warmwalzen der gewünschte stoffschlüssige Verbund zwischen der ersten und der zweiten Lage erzeugt wurde, so bearbeitet, dass der gewünschte Materialverlauf im gefertigten Formteil zu Tage tritt. Aus der Druckschrift US 2 171 040 ist ein weiteres Verfahren zum Herstellen eines Formteils bekannt, bei welchem zunächst ein Verbund aus zwei unterschiedlichen Lagen erzeugt wird, welcher anschließend zu einem Formteil geformt wird.

### Offenbarung der Erfindung

Es ist eine Aufgabe der vorliegenden Erfindung, ein Verfahren bereitzustellen, mit dem die Herstellung von Formteilen bestehend aus mehreren Lagen vereinfacht und insbesondere individualisiert wird.

Die vorliegende Erfindung löst die Aufgabe durch ein Verfahren zum Herstellen eines Formteils aufweisend die folgenden Verfahrensschritte:
-- Bereitstellen einer ersten Lage aus einem ersten Blechmaterial und mindestens einer zweiten Lage aus einem zweiten Blechmaterial,
-- Bilden eines vorläufigen Verbunds umfassend die erste Lage und die mindestens zweite Lage
-- Plattieren des vorläufigen Verbunds
-- Umformung des vorläufigen Verbunds zum Formteil mittels eines Drückwalz-, Drück- oder Tiefziehverfahrens,
wobei das Plattieren während der Umformung realisiert wird.

Gegenüber dem Stand der Technik werden mit dem erfindungsgemäßen Verfahren das Plattieren und die Umformung von Blechmaterialien in einem gemeinsamen Arbeitsschritt, ohne den aufwendigen Warmwalzprozess von Brammen durchführen zu müssen, durchgeführt. Dadurch wird eine Fertigung des Formteils nicht nur beschleunigt, sondern das Formteil lässt sich ohne weiteres einfacher individualisieren. Schließlich ist man nicht auf die im Coil vorgegebenen Anordnungen bzw. Dickenverhältnisse der dort verwendeten ersten und mindestens zweiten Lage angewiesen. Stattdessen können je nach Zielvorgabe für das gewünschte Formteil die erste Lage und mindestens zweite Lage aus Blechmaterialien, beispielsweise in Hinblick auf ihre Dicke, entsprechend individuell bereitgestellt werden.

Vorzugsweise wird die Umformung durch ein Projizieren, Drückwalzen und/oder Drücken realisiert. Beispielsweise wird durch die Umformung beispielsweise eine Nabe für das gefertigte Bauteil realisiert. Dabei ist es insbesondere vorgesehen, dass im vorläufigen Verbund die erste und die mindestens zweite Lage aus Blechmaterialien aneinander bzw. übereinanderliegen, ohne dass eine vergleichsweise großflächige stoffschlüssige Verbindung vorliegt. Dabei ist es vorstellbar, dass die erste und/oder die mindestens zweite Lage aus Blechmaterialien derart umgeformt werden, dass zusätzlich zur stoffschlüssigen Verbindung bei der Umformung ein Formschluss zwischen der ersten und der zweiten Lage realisiert wird. Insbesondere ist es vorgesehen, dass Umformung und Plattieren in einem gemeinsamen Arbeitsschritt simultan durchgeführt werden.

Vorteilhafte Ausgestaltungen und Weiterbildungen der Erfindung sind den Unteransprüchen sowie der Beschreibung unter Bezugnahme auf die Zeichnungen entnehmbar.

Gemäß einer weiteren Ausführungsform der vorliegenden Erfindung ist vorgesehen, dass die erste Lage und/oder die mindestens zweite Lage aus Blechmaterialien zum Plattieren erwärmt werden. Es ist auch vorstellbar, dass das Plattieren ohne vorheriges Erwärmen, d. h. kalt, durchgeführt wird. Weiterhin ist es denkbar, dass die erste und/oder mindestens zweite Lage aus Blechmaterialien gezielt in bestimmten Bereichen erwärmt wird. Durch das Erwärmen lassen sich in vorteilhafter Weise Umformung und Plattieren vereinfachen.

Gemäß einer weiteren Ausführungsform der vorliegenden Erfindung ist vorgesehen, dass ein zu einer Symmetrieachse vollständig rotationssymmetrisches Formteil geformt wird. Es ist auch denkbar, dass nur ein Teilbereich des Formteils einen rotationssymmetrischen Bereich aufweist. Weiterhin ist es vorstellbar, dass ein nicht-rotationssymmetrisches Formteil durch ein Unrunddrücken geformt wird. Beim Unrunddrücken wird beispielsweise durch eine kraft- oder weggesteuerte Drückrollenzustellung ein nicht-rotationssymmetrisches Formteil realisiert.

Gemäß einer weiteren Ausführungsform der vorliegenden Erfindung ist vorgesehen, dass beim Drückverfahren ein Drückkörper, beispielsweis eine Drückrolle, verwendet wird, wobei der Drückkörper beim Drückverfahren parallel und/oder senkrecht zur geplanten Symmetrieachse bewegt wird. Insbesondere liegt der Druckkörper bei der Umformung am vorläufigen Verbund an, wobei durch die Bewegung des Druckkörpers die zur Bildung des geplanten Formteils maßgebliche Umformung realisiert wird. Vorzugsweise wird die erste und/oder mindestens zweite Lage aus Blechmaterialien von mehreren, beispielsweise einander gegenüberliegenden, Druckkörpern realisiert. Zum Beispiel weist der Druckkörper einen diskusförmigen Grundkörper auf, dessen Abschlusskante beim Drückverfahren mit der ersten und/oder mindestens zweiten Lage aus Blechmaterialien in Kontakt tritt.

Gemäß einer weiteren Ausführungsform der vorliegenden Erfindung ist vorgesehen, dass ein vom ersten Blechmaterial verschiedenes zweites Blechmaterial verwendet wird, wobei insbesondere als erstes Blechmaterial und mindestens zweites Blechmaterial ein Eisenwerkstoff verwendet wird oder wobei als erstes Blechmaterial und als zweites Blechmaterial ein Nicht-Eisenwerkstoff verwendet wird. Dabei ist es vorstellbar, dass sich der als zweites Blechmaterial verwendete Eisenwerkstoff von dem als erstes Blechmaterial verwendeten Eisenwerkstoff in Hinblick auf physikalische Eigenschaften, beispielswiese Duktilität, Härte oder Formbarkeit unterscheidet. Beispielsweise unterscheiden sich das erste Blechmaterial und das mindestens zweite Blechmaterial in Hinblick auf einen Kohlenstoffgehalt. Vorzugweise weist die erste Lage des Blechmaterials einen Eisenwerkstoff mit einem Kohlenstoffanteil von mehr als 0,1 %-Gewichtsprozent, bevorzugt von mehr als 0,25 %-Gewichtsprozent und besonders bevorzugt von etwa 0,5 %-Gewichtsprozent auf. Dadurch lässt sich ein Formteil realisieren, dessen beispielsweise innenliegende Blechmaterialzusammensetzung für eine vergleichsweise hohe Härte sorgt, während die außenliegende Blechmaterialzusammensetzung im Vergleich zur innenliegenden Blechmaterialzusammensetzung geringeren Kohlenstoffanteil aufweist und dadurch eine höhere Duktilität bereitstellen kann.

Gemäß einer weiteren Ausführungsform der vorliegenden Erfindung ist vorgesehen, dass
-- die erste Lage einen Eisenwerkstoff und die mindestens zweite Lage einen Nicht-Eisenwerkstoff oder
-- die erste Lage einen Nicht-Eisenwerkstoff und die mindestens zweite Lage einen Eisenwerkstoff aufweist. Dadurch lässt sich das Spektrum potentieller Blechmaterialzusammensetzungen im gefertigten Formteil in vorteilhafter Weise erweitern.

Gemäß einer weiteren Ausführungsform der vorliegenden Erfindung ist vorgesehen, dass die erste und die mindestens zweite Lage aus Blechmaterialien zum Plattieren und Umformen fixiert werden. Dazu werden die erste und/oder die mindestens zweite Lage beispielsweise in eine Vorrichtung eingespannt und/oder die Lagen werden aneinandergedrückt. Auf diese Weise wird in vorteilhafter Weise sichergestellt, dass die erste und/oder die zweite Lage während des Plattierens und Umformens nicht verrutschen. Vorzugsweise wird ein Widerlager bzw. Niederhalter zur Fixierung der ersten und/oder mindestens zweiten Lage aus Blechmaterialien verwendet. Es ist auch denkbar, dass die erste Lage und die mindestens zweite Lage beispielsweise durch ein Anschweißen oder Zusammenklemmen zur Bildung des vorläufigen Verbunds für Transport- und Positionierzwecke zueinander fixiert werden.

Gemäß einer weiteren Ausführungsform der vorliegenden Erfindung ist vorgesehen, dass der vorläufige Verbund in einer Matrize angeordnet wird. Vorzugsweise umfasst die Matrize einen Aufnahmebereich, innerhalb dem der vorläufige Verbund zum Plattieren und zumindest teilweise zur Umformung angeordnet wird. Insbesondere ist die Matrize derart gestaltet, dass sie einem seitlichen Versatz des vorläufigen Verbunds bei der Bearbeitung entgegenwirkt.

Gemäß einer weiteren Ausführungsform der vorliegenden Erfindung ist vorgesehen, dass der vorläufige Verbund mittels eines Federelements in die Matrize eingespannt wird. Mittels der Federn lässt sich in vorteilhafter Weise für eine Fixierung sorgen. Dabei ist eine Federkraft des Federelements auf den Aufnahmebereich der Matrize gerichtet. Vorzugsweise umfasst die Matrize mehrere Federelemente, die derart angeordnet und/oder konfiguriert sind, dass der vorläufige Verbund innerhalb der Matrize innerhalb der Aufnahme durch die Federelemente zentralisiert wird. Mittels der Federelemente lässt sich zusätzlich für ein Nachrücken bzw. Nachsetzen der nicht plattierten und nicht umgeformten Teile des Verbundes sorgen.

Gemäß einer weiteren Ausführungsform der vorliegenden Erfindung ist vorgesehen, dass der vorläufige Verbund zum Plattieren und zur Umformung in einen zumindest teilweise konturierten Aufnahmebereich der Matrize angeordnet wird. Beispielsweise umfasst die Aufnahme einen konturierten Bodenbereich, um in vorteilhafter Weise für eine bessere Verzahnung beim Plattieren und Umformen zu sorgen.

Gemäß einer weiteren Ausführungsform der vorliegenden Erfindung ist vorgesehen, dass der vorläufige Verbund für das Plattieren und die Umformung auf einem formbestimmenden Werkzeugkörper, beispielsweise einer Ronde, angeordnet wird. Beispielsweise legt eine Außenkontur des formbestimmenden Werkzeugkörpers die Form einer Ausstülpung oder eines Hohlraums im gefertigten Formteil fest. Vorzugsweise wird der vorläufige Verbund mittels der Druckkörper gegen eine Außenseite des formbestimmenden Werkzeugkörpers angedrückt, bis das geplante Formteil geformt ist. Dabei ist es vorzugsweise vorgesehen, dass der vorläufige Verbund zwischen dem formbestimmenden Werkzeugkörper und einem Widerlager bzw. Niederhalter angeordnet ist, wobei der formbestimmende Werkzeugkörper und/oder das Widerlager bzw. der Niederhalter derart kraftbeaufschlagt sind, dass sie für eine Fixierung des vorläufigen Verbunds sorgen.

Gemäß einer weiteren Ausführungsform der vorliegenden Erfindung ist vorgesehen, dass die erste Lage als Blechmaterial einen Eisenwerkstoff mit einem Kohlenstoffanteil von mehr als 0,1 %-Gewichtsprozent, bevorzugt von mehr als 0,25 %- Gewichtsprozent und besonders bevorzugt von im Wesentlichen 0,5 % -Gewichtsprozent aufweist.

Gegenüber den Formteilen aus dem Stand der Technik lässt sich in vorteilhafter Weise mit dem erhöhten Kohlenstoffanteil für eine vergleichsweise hohe Härte des gefertigten Formteils sorgen. Vorzugsweise kann durch die Wahl der mindestens zweiten Lage mit einem niedrigeren Kohlenstoffanteil gegenüber der ersten Lage eine höhere Duktilität im gefertigten Formteil, insbesondere an dessen Außenseite, realisiert werden. Denkbar ist dabei, dass das gefertigte Formteil einen Hohlkörper aufweist, dessen Innenseite zumindest teilweise die erste Lage aufweist.

Die Erfindung ist nicht auf zwei Lagen aus Blechmaterialien beschränkt.

Gemäß einer weiteren Ausführungsform der vorliegenden Erfindung ist vorgesehen, dass das Formteil ein Gelenkkopf ist.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsform der Erfindung, welche den Erfindungsgedanken nicht einschränken.

### Kurze Beschreibung der Figuren

Die **Figur 1** zeigt eine Matrize geeignet für ein Verfahren zur Herstellung eines Formteils.
Die **Figuren 2 a bis d** zeigen schematisch in aufeinanderfolgenden Momentaufnahmen das Verfahren zur Herstellung eines Formteils gemäß einer ersten beispielhaften Ausführungsform der vorliegenden Erfindung.
Die **Figuren 3 a bis e** zeigen schematisch in aufeinanderfolgenden Momentaufnahmen ein Verfahren zur Herstellung eines Formteils gemäß einer zweiten beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

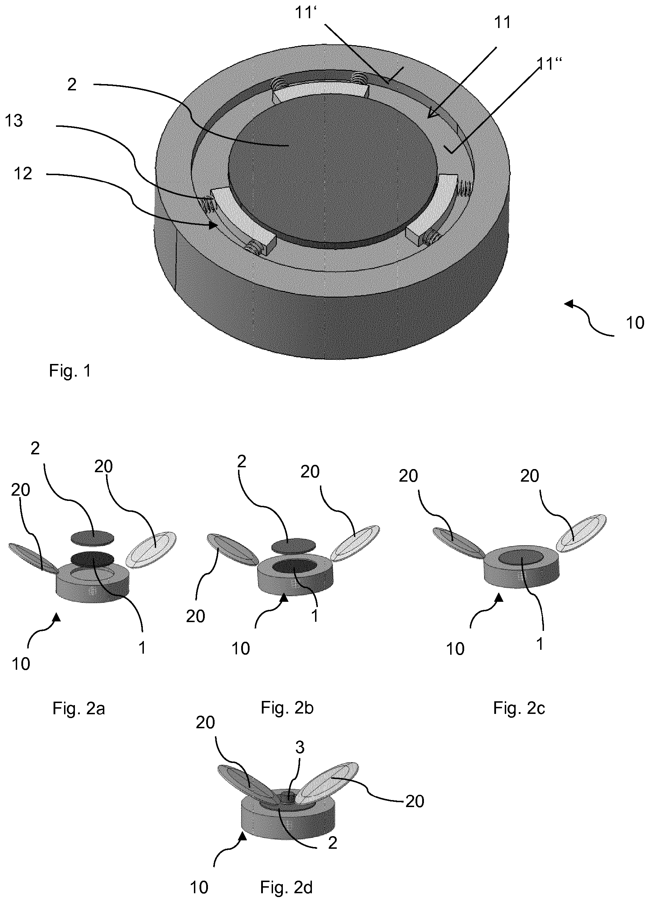

In **Figur 1** ist eine Matrize 10 geeignet für ein Verfahren zur Herstellung eines Formteils dargestellt. Dabei handelt es sich insbesondere um ein Verfahren, bei dem eine erste Lage 1 aus einem ersten Blechmaterial mit einer zweiten Lage 2 aus einem zweiten Blechmaterial plattiert, d. h. durch mechanisches Einwirken eine stoffschlüssige Überdeckung der ersten Lage 1 mit der zweiten Lage 2 erzeugt wird. Vorzugsweise handelt es sich bei dem zweiten Blechmaterial um ein solches, das edler bzw. wertiger ist als das erste Blechmaterial, oder es soll ein Formteil realisiert werden, das in unterschiedlichen Ebenen verschiedene physikalische Eigenschaften hat. Zur Herstellung des aus der ersten Lage 1 und der zweiten Lage 2 bestehenden Formteils ist es vorgesehen, dass zunächst das Plattieren, insbesondere ein das Plattieren begleitendes stoffschlüssiges Verbinden der ersten und der zweiten Lage 1 und 2, zusammen zu einem Verbund, in einem ersten Arbeitsschritt erfolgt. Hier nicht dargestellt, jedoch dem Fachmann geläufig, erfolgt dann in einem zweiten, separaten Arbeitsschritt die Umformung des Verbundes, wobei es sich bei der Umformung um ein Drück- oder Tiefziehverfahren handelt, mit dem die Gestalt des Formteils realisiert wird. Dadurch kann in vorteilhafter Weise darauf verzichtet werden, durch ein aufwendiges Warmwalzen von übereinander gestapelten Brammen im Vorfeld zunächst ein Halbzeug zu erzeugen. Zum Fixieren der ersten Lage 1 und der zweiten Lage 2 aus Blechmaterialien beim Plattieren ist vorzugsweise die Matrize 10 vorgesehen, wobei die Matrize 10 einen Aufnahmebereich zur Aufnahme eines vorläufigen Verbunds bestehend aus der ersten Lage 1 und der zweiten Lage 2 aufweist. Insbesondere umfasst die Matrize 10 mehrere Federelemente 12, mit denen die erste Lage 1 und die zweite Lage 2 in die Matrize 10 eingespannt werden. Im in Figur 1 dargestellten Ausführungsbeispiel sind Federelemente 12 umlaufend an einer Innenseite 11' des Aufnahmebereichs 11, insbesondere in gleichen Abständen zueinander, angeordnet. Beispielsweise umfassen die Federelemente 12 jeweils zwei Springfedern 13, die an die Innenseite 11' des Aufnahmebereichs 11 angebunden sind. Das der ersten bzw. der zweiten Lage 1 bzw. 2 zugewandte Ende des Federelements 12 ist vorzugsweise an einen Krümmungsradius, der von den scheibenförmigen ersten und zweiten Lagen 1 und 2 vorgegeben wird, angepasst. Weiterhin ist es vorgesehen, dass ein Bodenbereich 11" des Aufnahmebereichs 11 Konturen aufweist, um eine Verzahnung der zu plattierenden Lagen, welche auch mehr als zwei Lagen aus Blechmaterialien umfassen können, zu verbessern. Über geeignete und hier nicht dargestellte Mittel können eine oder beide Lagen vor dem Plattieren bei Bedarf erwärmt werden.

In den **Figuren 2 a bis d** ist schematisch in aufeinanderfolgenden Momentaufnahmen das Verfahren zur Herstellung eines Formteils gemäß einer ersten beispielhaften Ausführungsform der vorliegenden Erfindung dargestellt. Beispielsweise wird hierfür eine Matrize 10 verwendet, wie sie in Figur 1 illustriert ist. Zum Plattieren ist es hierbei vorgesehen, dass die scheibenförmige erste Lage 1 und die zweite Lage 2 übereinander innerhalb des Aufnahmebereichs 11 der Matrize 10 angeordnet werden. Dabei weisen die erste und die zweite Lage 1 und 2 denselben Durchmesser auf. Insbesondere werden die erste und die zweite Lage 1 und 2 deckungsgleich übereinandergelegt. Dabei ist es vorstellbar, dass die obere zweite Lage 2 bündig mit einer oberen Kante des Aufnahmebereichs 11 abschließt. Nachdem die erste und die zweite Lage 1 und 2 im Aufnahmebereich 11 platziert werden, wobei über geeignete und hier nicht dargestellte Mittel eine oder beide Lagen bei Bedarf erwärmt werden können, beginnt das gleichzeitige Umformen und Plattieren, indem zwei diskusförmige Drückkörper 20 auf die obere, hier zweite Lage 2, drücken und entlang einer im Wesentlichen parallel zu einer Haupterstreckungsebene der Lagen bzw. einer zum Bodenbereich 1" des Aufnahmebereichs 11 parallel verlaufenden Richtung bewegt werden. Insbesondere wird diese Bewegung solange wiederholt, bis sich die gewünschte Gestalt des zu fertigenden Formteils ergibt. Im vorliegenden Fall umfasst das gefertigte Formteil eine Nabe.

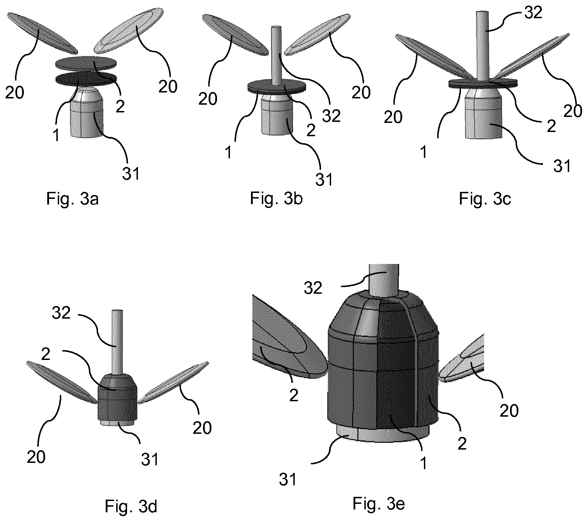

In den **Figuren 3 a bis e** ist schematisch in aufeinanderfolgenden Momentaufnahmen ein Verfahren zur Herstellung eines Formteils gemäß einer zweiten beispielhaften Ausführungsform der vorliegenden Erfindung dargestellt. Es ist hierbei vorgesehen, dass die erste Lage 1 und die zweite Lage 2 übereinanderliegend auf einer Ronde 31, insbesondere auf einem Endstück einer Ronde 31, aufgesetzt werden. Vorzugsweise verjüngt die Ronde 31 in Richtung des Endstücks, auf dem die erste Lage 1 und die zweite Lage 2 aufliegen. Insbesondere ist es vorgesehen, dass der Durchmesser der ersten Lage 1 bzw. der zweiten Lage 2 größer ist als ein maximaler Durchmesser der Ronde 31. Dadurch stehen die auf der Ronde 31 aufgesetzte erste und zweite Lage 1 und 2 gegenüber einer Seitenfläche der Ronde 31 hervor. Zur Fixierung ist ein Niederhalter 32 vorgesehen, wobei der Niederhalter 32 in einer Fixierstellung auf die zweite Lage 2 einwirkt und so die erste Lage 1 und die zweite Lage 2 zusammenhält. Mittels des Niederhalters 32 werden die erste und die zweite Lage 1 und 2 vorzugsweise gemeinschaftlich fixiert. Über geeignete und hier nicht dargestellte Mittel können eine oder beide Lagen bei Bedarf erwärmt werden. Weiterhin ist es vorgesehen, dass mittels zweier, insbesondere diskusförmiger, Drückkörper 20 ein Drückwalzverfahrens durchgeführt wird, mit dem einerseits ein Plattieren und andererseits die Umformung bewirkt wird. Dabei werden die Druckkörper 20 entlang einer im Wesentlichen parallel zu einer Achse der Ronde bzw. entlang einem von einer Außenseite der Ronde vorgegebenen Verlauf bewegt, wobei die Ronde vollständig rotationssymmetrisch zur Achse ist. Durch das Drückwalzen wird insbesondere bewirkt, dass die erste und die zweite Lage 1 und 2 nach der Umformung gemeinschaftlich an einer Außenseite der Ronde 32 anliegen und so das gefertigte in Figur 3e gezeigte Formteil bereitgestellt wird.

### Bezugszeichenliste

- 1: erste Lage
- 2: zweite Lage
- 10: Matrize
- 11: Aufnahmebereich
- 11': Bodenbereich
- 11": Innenseite
- 12: Federelemente
- 13: Springfeder
- 20: Drückkörper
- 31: Ronde
- 32: Niederhalter

## Patentansprüche

1. Verfahren zum Herstellen eines Formteils, aufweisend die folgenden Verfahrensschritte:
-- Bereitstellen einer ersten Lage (1) aus einem ersten Blechmaterial und mindestens einer zweiten Lage (2) aus einem zweiten Blechmaterial,
-- Bilden eines vorläufigen Verbunds umfassend die erste Lage (1) und die mindestens zweite Lage (2)
-- Plattieren des vorläufigen Verbunds
-- Umformung des vorläufigen Verbunds zum Formteil mittels eines Drückwalz-, Drück- oder Tiefziehverfahrens,
**dadurch gekennzeichnet, dass**
das Plattieren während der Umformung realisiert wird.

2. Verfahren gemäß Anspruch 1, wobei die erste Lage (1) und/oder die mindestens zweite Lage (2) zum Plattieren und Umformen erwärmt werden.

3. Verfahren gemäß einem der vorhergehenden Ansprüche, wobei zumindest bereichsweise ein zu einer Symmetrieachse vollständig rotationssymmetrisches Formteil geformt wird.

4. Verfahren gemäß Anspruch 3, wobei beim Drückverfahren ein Drückkörper (20) verwendet wird, wobei der Drückkörper (20) beim Drückverfahren parallel und/oder senkrecht zur geplanten Symmetrieachse bewegt wird.

5. Verfahren gemäß einem der vorhergehenden Ansprüche, wobei ein vom ersten Blechmaterial verschiedenes mindestens zweites Blechmaterial verwendet wird, wobei insbesondere als erstes Blechmaterial und zweites Blechmaterial ein Eisenwerkstoff verwendet wird oder wobei als erstes Blechmaterial und als zweites Blechmaterial ein Nicht-Eisenwerkstoff verwendet wird.

6. Verfahren gemäß einem der vorhergehenden Ansprüche, wobei die erste Lage (1) und die mindestens zweite Lage (2) zum Plattieren und Umformen fixiert werden.

7. Verfahren gemäß einem der vorhergehenden Ansprüche, wobei der vorläufige Verbund in einer Matrize (10) angeordnet wird.

8. Verfahren gemäß Anspruch 7, wobei der vorläufige Verbund mittels eines Federelements (12) in die Matrize (10) eingespannt wird.

9. Verfahren gemäß Anspruch 7 oder 8, wobei der vorläufige Verbund zum Plattieren und zur Umformung in einem zumindest teilweise konturierten Aufnahmebereich (11) der Matrize (10) angeordnet wird.

10. Verfahren gemäß einem der vorhergehenden Ansprüche, wobei der vorläufige Verbund für das Plattieren und die Umformung auf einem formbestimmenden Werkzeugkörper, beispielsweise einer Ronde (31), angeordnet wird.

11. Verfahren gemäß einem der vorhergehenden Ansprüche, wobei die erste Lage (1) als Blechmaterial einen Eisenwerkstoff mit einem Kohlenstoffanteil von mehr als 0,1 %-Gewichtsprozent, bevorzugt von mehr als 0,25 %- Gewichtsprozent und besonders bevorzugt von im Wesentlichen 0,5 % -Gewichtsprozent aufweist.

12. Verfahren gemäß Anspruch 11, wobei das Formteil ein Gelenkkopf ist.

## Claims

1. Method for producing a shaped part having the following method steps:
-- providing a first layer (1) consisting of a first sheet metal material and at least a second layer (2) consisting of a second sheet metal material,
-- forming a preliminary composite comprising the first layer (1) and the at least second layer (2)
-- plating the preliminary composite
-- forming the preliminary composite to obtain the shaped part using a flow turning, compression or deep drawing method,
**characterized in that**
the plating is done during the forming process.

2. Method according to Claim 1, wherein the first layer (1) and/or the at least second layer (2) are heated for the plating and forming.

3. Method according to either of the preceding claims, wherein a shaped part is formed which is entirely rotationally symmetrical to an axis of symmetry at least in certain regions.

4. Method according to Claim 3, wherein a pressing body (20) is used during the compression method, the pressing body (20) being moved parallel and/or perpendicular to the planned axis of symmetry during the compression method.

5. Method according to one of the preceding claims, wherein an at least second sheet metal material is used which is different from the first sheet metal material, in particular an iron material being used as the first sheet metal material and second sheet metal material or a nonferrous material being used as the first sheet metal material and as the second sheet metal material.

6. Method according to one of the preceding claims, wherein the first layer (1) and the at least second layer (2) are secured for the plating and forming.

7. Method according to one of the preceding claims, wherein the preliminary composite is arranged in a die (10).

8. Method according to Claim 7, wherein the preliminary composite is clamped in the die (10) by means of a spring element (12).

9. Method according to Claim 7 or 8, wherein the preliminary composite for the plating and for the forming is arranged in an at least partly contoured receiving region (11) of the die (10).

10. Method according to one of the preceding claims, wherein the preliminary composite for the plating and the forming is arranged on a shape-determining tool body, such as a round blank (31).

11. Method according to one of the preceding claims, wherein the first layer (1) as sheet metal material comprises an iron material with a carbon fraction of more than 0.1 wt. %, preferably more than 0.25 wt. % and especially preferably substantially 0.5 wt. %.

12. Method according to Claim 11, wherein the shaped part is a joint head.

## Revendications

1. Procédé de fabrication d'une pièce moulée, comprenant les étapes de procédé suivantes :
- la fourniture d'une première couche (1) d'un premier matériau en tôle et d'au moins une deuxième couche (2) d'un deuxième matériau en tôle,
- la formation d'un composite préliminaire comprenant la première couche (1) et l'au moins une deuxième couche (2),
- le placage du composite préliminaire,
- le formage du composite préliminaire en la pièce moulée au moyen d'un procédé de fluotournage, de compression ou d'emboutissage,
**caractérisé en ce que**
le placage est réalisé pendant le formage.

2. Procédé selon la revendication 1, dans lequel la première couche (1) et/ou l'au moins une deuxième couche (2) sont chauffées pour le placage et le formage.

3. Procédé selon l'une quelconque des revendications précédentes, dans lequel une pièce moulée à symétrie de rotation complète par rapport à un axe de symétrie est au moins partiellement formée.

4. Procédé selon la revendication 3, dans lequel un corps de compression (20) est utilisé dans le procédé de compression, dans lequel le corps de compression (20) est déplacé parallèlement et/ou perpendiculairement à l'axe de symétrie prévu dans le procédé de compression.

5. Procédé selon l'une quelconque des revendications précédentes, dans lequel au moins un deuxième matériau en tôle différent du premier matériau en tôle est utilisé, dans lequel un matériau ferreux est notamment utilisé en tant que premier matériau en tôle et deuxième matériau en tôle, ou dans lequel un matériau non ferreux est utilisé en tant que premier matériau en tôle et en tant que deuxième matériau en tôle.

6. Procédé selon l'une quelconque des revendications précédentes, dans lequel la première couche (1) et l'au moins une deuxième couche (2) sont fixées pour le placage et le formage.

7. Procédé selon l'une quelconque des revendications précédentes, dans lequel le composite préliminaire est agencé dans une matrice (10).

8. Procédé selon la revendication 7, dans lequel le composite préliminaire est serré dans la matrice (10) au moyen d'un élément à ressort (12).

9. Procédé selon la revendication 7 ou 8, dans lequel le composite préliminaire est agencé dans une zone de réception (11) au moins partiellement profilée de la matrice (10) pour le placage et le formage.

10. Procédé selon l'une quelconque des revendications précédentes, dans lequel le composite préliminaire est agencé sur un corps d'outil déterminant la forme, par exemple un rond (31), pour le placage et le formage.

11. Procédé selon l'une quelconque des revendications précédentes, dans lequel la première couche (1) comprend en tant que matériau en tôle un matériau ferreux ayant une proportion de carbone supérieure à 0,1 % en poids, de préférence supérieure à 0,25 % en poids et de manière particulièrement préférée d'essentiellement 0,5 % en poids.

12. Procédé selon la revendication 11, dans lequel la pièce moulée est une tête d'articulation.
